# EUROPEAN PATENT SPECIFICATION

(11) **EP 3 914 572 B1**
(45) Date of publication and mention of the grant of the patent: **13.03.2024**
(21) Application number: 20723532.6
(22) Date of filing: 17.04.2020
(51) Int. Cl.: C04B 35/01, C04B 41/50, H01P 1/203, H01P 1/208, H01P 7/08, H01P 7/10

(54) **DUAL RESONATOR FILTERS OF THICK DIELECTRIC FILMS AND RESPECTIVE METHOD OF PRODUCTION**
FILTER MIT ZWEI RESONATOREN AUS DIELEKTRISCHEN DICKSCHICHTEN UND ZUGEHÖRIGES HERSTELLUNGSVERFAHREN
FILTRES À DEUX RÉSONATEURS CONSTITUÉS DE FILMS DIÉLECTRIQUES ÉPAIS ET PROCÉDÉ DE PRODUCTION RESPECTIF

(30) Priority: 17.04.2019 PT 2019115461
(43) Date of publication of application: 01.12.2021
(73) Proprietor: Universidade de Aveiro, 3810-193 Aveiro (PT)
(72) Inventor: LOUSADA SILVEIRINHA VILARINHO, Paula Maria, 3810-048 Aveiro (PT); SU, Xinmimg, 3810-104 Aveiro (PT); KOORIYATTIL, Sudheendran, 3810-120 Aveiro (PT)
(74) Representative: Patentree
(86) International application number: PCT/IB2020/053646
(87) International publication number: WO 2020/212922

(56) References cited:
- PT-A- 107 271
- US-A- 6 111 485

## Description

### Technical Domain

The present invention relates to microwave filters that are microstrip line coupled thick film dielectric resonator filters and therefore, to dielectric resonators of multimode type and to an electrophoretic process to obtain them.

The present invention is thus, useful for applications in electronics, telecommunications, in particular wireless communications and technologies requiring radio high-frequency and microwave devices, such as bandpass filters, satellite receivers and satellite broadcasting (TVRO/DBS) devices.

### Background of the invention

The extensive use of ceramic dielectric resonators as substitutes of metallic resonant cavities in Radio Frequency (RF) and microwave circuits (MW) dates back to the 1970s. The first low loss, temperature stable ceramic dielectric to be used was barium titanate oxide ceramic materials. High dielectric constant ceramics with adjustable temperature coefficients, later developed, allowed the generalised use of these ceramics in oscillator and narrowband filter designs for radar detectors, cellular phone and public safety base stations, satellite receivers and satellite broadcasting (TVRO/DBS) applications.

Two relevant advantages of ceramic dielectric resonators are related with cost and size. As Liang explains in the document "Edward C. Liang, An Overview of High Q TE Mode Dielectric Resonators and Applications, MICROWAVE JOURNAL, 2015, Vol.58(2), p.72." the size of a dielectric resonator is considerably smaller than that of an air resonant cavity at the same frequency, because the relative dielectric constant of the material is substantially larger than unity, the dielectric constant of air. The resulting size reduction approximately equals the square root of the resonator's dielectric constant, √εr. As an example, a resonant circuit using a dielectric resonator with εr = 38 will be more than six times smaller than the equivalent air resonant cavity. With the size reduction there is a direct reduction of costs. Due to the advantages of low loss, small size, and superior temperature stability, dielectric resonators are currently widely used in most of the microwave circuits.

However, due to the current growth of wireless communications (wide adoption of Internet of Things - IoT- raises the needs for wireless communications everywhere, for everything, at any time) more and more applications in telecommunications and wireless technology requires compact radio frequency and microwave devices, as bandpass filters. In response, compact microstrip resonators with superior performance are continuously in demand.

There are several possible operating modes for dielectric resonators. The list includes single transverse electric (TE) modes, single transverse magnetic (TM) modes, dual hybrid electromagnetic (HEM) modes, triple (TM) modes and triple TE modes. Some of these modes are highly dependent up on the dimensions of the dielectric resonators. At frequencies below 20 GHz, low-order modes such as TE01δ and TM01δ have found their applications as oscillators, filters, and power combiners; these modes can be relatively easily coupled by cut-of waveguides, magnetic loops, and microstrip lines.

For a relatively large-sized cylindrical resonator at higher frequencies, say above 30 GHz, whispering-gallery modes, which are believed to have a higher Q but to be more difficult to couple simply with microstrip lines, can be observed. It has been also thought that by reducing the thickness of the dielectric resonators one may be able to couple these superficial surface modes at a much lower frequencies since these extreme topologies may support only these surface modes.

Many applications in telecommunication and wireless technology required compact radio frequency and microwave bandpass filters. Compact microstrip resonators with superior performance are continuously developed to meet the demands. These microstrip resonators can be classified into single-mode and multimode resonators.

The single-mode resonator can be categorised into six sub-classes. They are the half-wavelength resonators, quarter-wavelength resonators, stepped impedance resonators, quarter- wavelength stepped impedance resonators, patch resonators and ring resonators. These single-mode resonators are the basic structure for the theory and design method of the lowpass, highpass, bandpass and bandstop filters. N number of single- mode resonators is required for an N-th order filter. One way of reducing the filter size is to use multimode resonators. If each multi-mode resonator has N modes, the number of resonators in the filter design is reduced by a factor of N. Thus, if the dual-mode resonators (N = 2) are used, the filter size is halved and so on.

Increased integration and functionality, small size, and reduced costs are some of the present demands in electronics, microelectronics and related industries.

High frequency devices are no exemption and due to urge towards miniaturization and integration one is being forced to think of replacing the large ceramic puck dielectric resonators with other alternatives. The effective use of the surface modes of the dielectric resonators may be a suitable possibility. The utilization of high dielectric constant films allows the miniaturization of both active and passive components reducing the losses.

There are several processes to fabricate thick films, among them electrophoretic deposition (EPD) is rising crescent attention as a materials processing technique; due to its high flexibility, low cost and simplicity of application and consequently has been exploited for a wide range of technical applications. Two other relevant aspects related with EPD are the facility of fabrication of intricate shapes and the possibility to be scaled-up for a large volume fabrication.

EPD is a colloidal process in which charged particles dispersed in a stable suspension are driven to move towards an oppositely charged electrode, upon which they ultimately deposit, to build up a particulate coating. EPD has been widely used for the fabrication of nanoparticles, carbon nanotubes (CNTs), high-performance functional thick/thin films, solid oxide fuel cells (SOFCs) and biomaterials. Moreover, EPD technique is industrially used for applying coatings to metal fabricated products, such as automobile bodies and parts, tractors and heavy equipment, electrical switch gear, appliances, metal furniture, beverage containers, fasteners, and many other industrial products.

The quality of EPD films depends mainly on two groups of parameters: those related to the suspension, such as the chemical and physical nature of the media (dielectric constant of liquid and conductivity) and particle size of the powders suspended in the liquid media, and those related to the processing including physical parameters, such as deposition time and applied voltage.

It is well known that the selection of the medium, the stability of the suspensions, and the control of the particle potentials are critical for a good deposition. As a rule of thumb for a successful EPD the suspension needs to be stable and the mobility of particles due to electrophoresis must be higher than that due to gravity. Organic solvents are the most common dispersing media in electrophoretic deposition.

EPD has been exploited for the fabrication of different electro-ceramic thick films, such as PZT on an alumina substrate, PZT on copper and on platinum foils, BaNd2Ti5O14 (BNT) on platinum foils and alumina substrates, TiTe3O8 on platinum and alumina substrates, and even for multilayering new high permittivity composite layers for high frequency applications (in this case BaLa4Ti4O15 (BLT) and BNT), that may be fabricated with potentially complex geometries, among others.

Document WO2004074207 A1 discloses a method for the production of a ceramic material based in alumina that is sintered at a low temperature to be applied to high-frequency communication devices in the production of dielectric resonator filters. However, these filters do not comprise films of titanium tellurite having a copper microstrip line coupled to an alumina substrate. However, BLT and BNT can be sintered only at high temperature and hence they may not be able to in cooperate with copper based microstrip-line.

Document US2015048904 A1 discloses a resonator filter and its method of production, which comprises mixing of iron and nickel powder materials to be applicable to a communication device. These powders are further deposited by injection moulding to form a resonator tube, which is sintered under vacuum conditions, with addition of an adhesive and a cavity filter. However, these filters do not comprise a ceramic material comprising double dielectric films of titanium tellurite printed on a copper microstrip line coupled to an alumina substrate.

Document PT107271A discloses a process of production of dielectric materials by electrophoretic deposition in alumina substrates. However, this document does not disclose filters comprising a dual circular layer of films of titanium tellurite having a copper microstrip line coupled to an alumina substrate.

Document US6111485 A discloses superconducting filter arrangement comprising a superconducting dielectric resonator and a waveguide arrangement comprising a copper microstrip line to which the resonator is connected, wherein the resonator is a finite parallel-plate resonator made of a non-linear dielectric material that has a high dielectric constant on which superconducting plates are arranged, wherein the resonator has finite extensions and the waveguide arrangement comprises a microstrip line magnetically coupled to one of the plates of the resonator via contact means, the resonator being connected to said contact means of the waveguide arrangement in such a way that electric contact is provided and the filter arrangement is frequency tunable.

Document PT 107271 A discloses synthesis of dielectric resonators. TiTe3O8 dielectric films are deposited an alumina insulating substrate, resulting in a low dielectric loss. The use of the telluride dielectric films leads to a low sintering temperature and a good microwave property. The dielectric film has a thickness of 5-50 microns. The examples mention thicknesses of 15-27 microns.

Therefore, there is a need to provide a method for obtaining compact microstrip resonators with superior performance that can be applied to high-frequency devices, which presents high flexibility, low cost and simplicity of application.

The present invention proposes to overcome the obstacles of the prior art by providing an electrophoretic deposition (EPD) method for producing a dual resonator filter having thick dielectric resonator films printed on insulating substrates.

### Summary of the invention

The present invention relates to a dual resonator filter of thick dielectric films of titanium tellurite (TiTesOs), as defined in the claims, having a conductive microstrip line, preferably a copper microstrip line coupled to a low-loss insulating and low relative permittivity substrate, preferably alumina (Al₂O₃) substrate, and to a method for producing said filter by electrophoretic deposition (EPD).

The dual resonator filter of the present invention comprises thick dielectric films of titanium tellurite (TiTe₃O₈) having a conductive microstrip line coupled to a low-loss insulating and low relative permittivity substrate according to claim 1.

Such dual resonator filters are compact but small size and present superior performance that can be applied to high-frequency devices with increased integration and functionality.

The invention uses dielectric thick films comprising a dual circular layer of TiTe₃O₈ printed on a low-loss insulating and low relative permittivity substrate.

In this way, the films used in the present invention present good Q values and high thermal stability, and therefore are of great value for high-frequency applications, such as resonator filters.

The process for obtaining these resonator filters comprises the deposition of thick dielectric films of TiTe₃O₈ on alumina substrates by electrophoretic deposition (EPD) technique followed by low sintering temperature according to claim 6.

The application of EPD techniques for the production of resonator filters revealed to be highly flexible with low cost and simplicity of implementation.

The production of said films by EPD allows to obtain dense substrate conducting materials in an easy, reliable and low cost manner that can be applied to several devices in electronics, telecommunications, in particular wireless communications and technologies requiring radio high-frequency and microwave devices, such as bandpass filters, satellite receivers and satellite broadcasting (TVRO/DBS) devices.

### General description of the invention

The present invention relates to microwave filters that are microstrip line coupled thick film dielectric resonator filters and therefore, to dielectric resonators of multimode type and to an electrophoretic process to obtain them, as defined in the claims.

The present invention relates to a dual resonator filter of thick dielectric films of titanium tellurite (TiTe₃O₈) having a conductive microstrip line coupled to a low-loss insulating and low relative permittivity substrate, and to a method for producing said filter by electrophoretic deposition (EPD).

In a preferable embodiment, the present invention relates to a dual resonator filter of thick dielectric films of titanium tellurite (TiTesOs) having a copper microstrip line coupled to an alumina (Al₂O₃) substrate, and to a method for producing said filter by electrophoretic deposition (EPD).

The dual resonator filters of the present invention comprise thick dielectric resonator films of titanium tellurite (TiTe₃O₈) printed on low-loss insulating and low relative permittivity substrates coupled with a conductive microstrip line close to the dual circular titanium tellurite (TiTesOs) dielectric layers of said film.

The films of the present invention are thick dielectric films of titanium tellurite (TiTe₃O₈) printed on low-loss insulating and low relative permittivity substrates.

In the scope of the present invention the expression "low loss substrate" means a substrate presenting low dielectric loss/tanδ, that is equivalent to a high-quality factor (Q).

TiTe₃O₈ is a LTCC (Low Temperature Co-fired Ceramic) class microwave material as it can be used effectively with copper and other conductive materials.

Such films are thick dielectric films composed of low sintering temperature titanium tellurite TiTe₃O₈ dielectrics with at least 15 µm thickness.

In the scope of the present invention, "high sintering temperatures" are temperatures ranging between 1000 - 1300°C, and "low sintering temperatures" are the ones ranging from 500 and 800°C.

Suitable substrates for this purpose are substrates with low-loss insulating and low relative permittivity properties, along with other relevant properties as well namely alumina, aluminium nitride(AIN) and Silicon carbide(SiC).

In a preferred embodiment alumina (Al₂O₃) is used. Alumina presents high microwave Quality factor (Q), thus very low dielectric losses, moderate dielectric permittivity and a very good adhesion with the Titanium telluride.

Microwave properties of some films according to the invention are presented in Table 1.

**Table 1. Microwave properties of TiTe₃O₈ thick films on Al₂O₃ substrates**

| Sintering Temp(°C) for 5h | Thickness (µm) | εr (at 20 GHz) | Qf* (GHz) | Measurement frequency (GHz) |
|---|---|---|---|---|
| 680 | 21 | 28 | 21978 | 20 |
| 700 | 19 | 32 | 21053 | 20 |
| 720 | 27 | 32 | 23256 | 20 |

Qf is the quality factor of the thick film dielectric resonator which is equal to 1/tanδ

Substrates suitable for this purpose are substrates with low-loss insulating and low relative permittivity properties along with other relevant properties as well, as for example, alumina, aluminium nitride (AIN) and Silicon carbide (SiC).

Amongst alumina substrates carbon coated alumina substrates are preferred, in particular carbon coated insulator alumina substrates. The carbon coating of the alumina substrates is preferably in the form of graphite. However, other conducting materials that decomposes a low temperature, might be used.

The conductive microstrip line coupled to substrates with low loss insulating and low relative permittivity, preferably an alumina (Al₂O₃) substrate, according to the above mentioned, is placed close to the dual circular titanium tellurite (TiTesOs) dielectric layers of films as defined above.

Suitable materials to be used as conductive microstrip line are metals with good conductivity, namely copper, gold or platinum. Preferably, copper is used as conductor due to its good conductive properties and low price. Moreover, industry is very familiar with copper thus it is easily available.

In one embodiment, the copper microstrip line such as a copper tape or a copper wire is attached onto the alumina substrate, preferably a copper tape because it is wider than a copper wire, thus provides better area.

In the scope of the present invention the expression "a copper microstrip line close to the dual circular titanium tellurite (TiTesOs) dielectric layers of said film" means the microstrip line is at a distance of 5 to 10 mm of the dielectric layers of the film.

Dual resonator filters can thus be advantageously obtained with thick dielectric films of titanium tellurite (TiTesOs) having a copper microstrip line coupled to an alumina (Al₂O₃) substrate according to the above described films, substrates and microstrip line further incorporated in a housing. Said housing can be for example an aluminium housing or other suitable for the intended application of the resonator filters.

Dual resonator filters according to the present invention are prepared by printing thick dielectric films of titanium tellurite (TiTesOs) on an alumina (Al₂O₃) substrate by electrophoretic deposition (EPD) followed by a sintering step and coupling a copper microstrip line to said alumina (Al₂O₃) substrate.

Dielectric powders, in particular TiTe₃O₈ powders can be synthesized via a conventional solid-state-reaction method as described by Vilarinho et al. (Titanium tellurite thick films prepared by electrophoretic deposition and their dielectric properties; Xinming Su, Aiying Wu and Paula M. Vilarinho., Scripta Materialia 61 (2009) 536-539) to form a suspension.

Alumina (Al₂O₃) substrates can be made temporarily conductors by coating them with a sacrificial conducting carbon coating that acts as a temporary electrode being later burned at high sintering temperatures to avoid leaving residual contaminations.

The thickness of the carbon layer plays a key role on the quality of the films after sintering because EPD needs a conductive substrate being this a technical limitation. This problem can be solved by applying a sacrificial layer of a conductive material, such as graphite, thus allowing the deposition of films on insulation conductors.

Therefore, the role of a carbon layer can be regarded as essential to form a conductive layer for EPD process and as the thickness increases it conducting property will increase which will results in good quality EPD grown dielectric thick films.

TiTe₃O₈ coatings are deposited onto non-conducting Al₂O₃ substrates by electrophoretic deposition (EPD) with a metal acting as the counterpart electrode and a mask to deposit circular parallel dielectric green disk thick films to define the film dimensions.

In the scope of the present invention the expression "green disc" means a non-sintered disk.

The TiTesOsfilms thus formed can be dried and sintered at low sintering temperature in a closed Al₂O₃ crucible together with TeO₂ powders to avoid Te volatilization.

These films on alumina substrates possess good Q values and high thermal stability and therefore are potentially useful for high-frequency applications.

These materials can be integrated with tuneable dielectrics or dielectrics on insulator substrates to provide a platform for devices in the front end of communication systems and cellular base stations.

Based on the thickness and dielectric constant of the Al₂O₃ substrates, as described above it is possible to calculate the necessary width W of the microstrip line for making a transmission line. Therefore, a copper or any other material with similar conductive properties, tape is firmly fixed to the dielectric resonators to ensure proper coupling.

Finally, the dielectric resonator (DR) coupled with a microstrip line filter can be inserted in a casing suitable for the intended use.

### Description of the figures

**Figure 1****.** Represents
   a) a conventional microwave antenna,
   b) a conventional coupled resonator filter based on thick dielectric films printed / deposited on alumina substrates, and
   c) a dual resonator filter with a coupled microstrip line according to a preferred embodiment of the invention.
**Figure 2**. Represents a thick film of TiTe₃O₈ (1) on an insulator substrate of Al₂O₃ (3) with a conducting carbon layer (2).
**Figure 3**. SEM micrographs of the cross section of TiTe₃O₈ films deposited by EPD under 100 V for 3 min on carbon coated alumina substrates. Compact and uniform ~52 µm thick TiTe3O8 films were deposited (Fig.3a) and (Fig.3b) on a continuous uniform 250 nm carbon layer (Fig.3c).
**Figure 4**. SEM micrographs of TiTe₃O₈ films deposited on carbon coated alumina substrates sintered at 700°C for 5 h, surface (Fig.4a), cross section (Fig.4b) and high magnification cross section and EDS spectra. Under these sintering conditions (700°C for 5 h in air) TiTe₃O₈ films show to be dense and uniform.
**Figure 5**. The optical micrographs of sintered films of TiTe₃O₈ on alumina substrate printed / deposited by EPD. By compared the films (Fig.5a) and the sintered TiTe₃O₈ thick films (Fig.5b), it is possible to clearly note the removal of the graphite layer.
**Figure 6**. Schematic diagram of design microstrip line coupled dual resonator filter, with the indication of the alumina substrate (3) with the TiTe₃O₈ films (1) printed onto them and of the Cu wire tape (4), and an Al case (5).
**Figure 7**. A dual resonator filter coupled with a microstrip line, comprising thick dielectric resonator TiTe₃O₈ films printed on insulating alumina substrates by electrophoretic deposition technique for application in microwave and millimetre wave devices.
**Figure 8**. The filter response results of the microstrip line coupled dual resonator filter, comprising thick dielectric resonator TiTe₃O₈ films printed on insulating alumina substrates by electrophoretic deposition technique. This device has an average pass band of 6 GHz with a start frequency of 2 GHz and stop frequency of 8 GHz. The curve shows the average insertion loss of the device is now <-2 db at the pass band and return loss is >- 20 db in the pass band. These values are comparable with any broadband filters.

### Description of a preferred embodiment of the invention

The present invention relates to a dual resonator filter of thick dielectric films of titanium tellurite (TiTesOs) having a copper microstrip line coupled to an alumina (Al₂O₃) substrate and to a method for producing said filter by electrophoretic deposition (EPD), as defined in the claims.

Dual resonator filters according to the present invention are prepared by printing thick dielectric films of titanium tellurite (TiTesOs) on an alumina (Al₂O₃) substrate by electrophoretic deposition (EPD) followed by a sintering step and coupling a copper microstrip line coupled to said alumina (Al₂O₃) substrate.

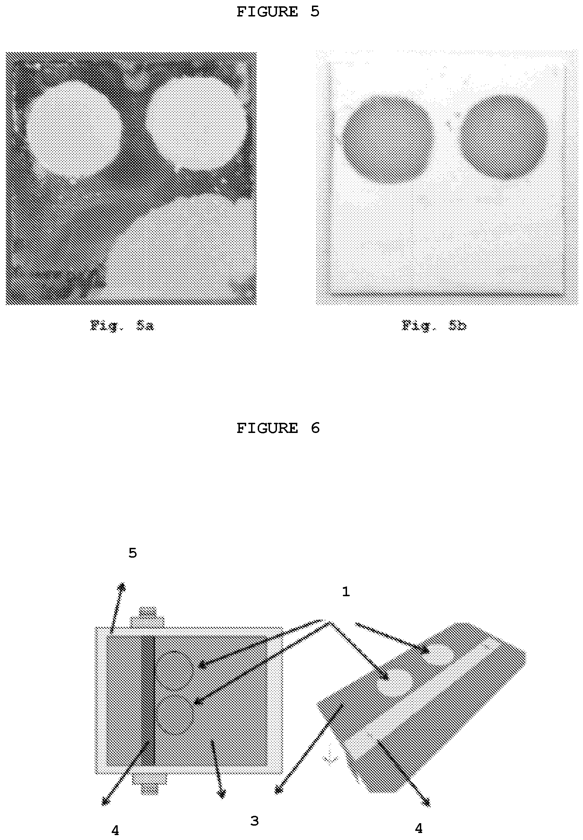

In particular, TiTe₃O₈ dielectric thick films are printed / deposited on non-conducting alumina (Al₂O₃) substrates by solution based electrophoretic deposition (EPD) thereby forming TiTe₃O₈ dielectric layers, then sintered at low sintering temperatures between 600 °C to 800 °C, preferably between 650 °C to 750 °C, more preferable between 680 °C to 720 °C, for a period of time ranging between 3 to 6 h, preferably between 3.5 to 5.5 h, more preferably between 4 to 5 h, and finally a copper microstrip line was fixed at a calculated distance to the dielectrics to form a dual resonator filter (Fig. 6).

In particular, the method of the invention comprises the following steps:
a) providing TiTe₃O₈ dielectric powders;
b) providing TiTe₃O₈ dielectric suspensions;
c) providing non-conducting alumina substrates;
d) electrophoretic deposition of TiTe₃O₈ dielectric coatings onto carbon coated alumina substrates;
e) sintering said dual ceramic discs at a temperature commensurate with the crystallization temperature of the deposited layers;
f) attaching a copper tape onto the alumina substrate close to the dual circular TiTe₃O₈ dielectric discs.

The TiTe₃O₈ dielectric powders can be prepared from reagent-grade TeO₂ and TiO₂ via a conventional solid-state- reaction method, as mentioned above. The starting precursors can be weighed according to the molar ratio of 3:1, balled, mixed with an organic solvent, such ethanol and dried. The mixed powders are calcined and milled to produce the desired powders.

The dielectric powders can be then dispersed in an organic solvent, such as acetone to form TiTe₃O₈ suspensions.

A stabilizer, such as triethanolamine (TEA) can be added to the suspension to favour the EPD process, as described by Xinming Su et al. (Xinming Su, Aiying Wu, Paula M. Vilarinho - Triethanolamine as an Additive in the Electrophoretic Deposition of TiTe3O8 Thick Films, Key Engineering Materials, 507, 27-34,2012).

Non-conducting alumina substrates can be prepared by coating alumina substrates with a sacrificial conducting carbon coating that acts as a temporary electrode being burned at high sintering temperatures, such as temperatures between 600 and 1200 °C, thus avoiding leaving residual contaminations.

For the electrophoretic deposition of dual TiTe₃O₈ dielectric circular layers onto carbon coated alumina substrates, to form dual ceramic film discs, a metallic counterpart electrode can be provided, such as a stainless steel electrode.

For this purpose, a specific mask is provided to define the desired film disks dimensions. In particular, a Teflon mask can be used and thus it is possible to deposit circular parallel dielectric green disk thick films onto alumina substrates thereby obtaining a dual-layered dielectric film.

A DC voltage supplier for generating a DC voltage in the range of 100 to 400 V for various periods of time (1 up to 5 min) can be provided for the EPD step.

It is possible to obtain a film comprising dual TiTe₃O₈ dielectric circular layers as described above.

Accordingly, it is possible to obtain dual TiTe₃O₈ dielectric thick films of approximately 30 to 100 µm thickness and approximately 10 mm diameter, each of the layers having at least 15 µm thickness.

Preferably, the obtained films are dried, for example at room temperature for more than 24 h prior to sintering step.

The obtained films can be sintered at low sintering temperatures, for example at temperatures ranging between 600 °C to 800 °C, preferably between 650 °C to 750 °C, more preferable between 680 °C to 720 °C, for a period of time ranging between 3 to 6 h, preferably between 3.5 to 5.5 h, more preferably between 4 to 5 h.

It was observed that BNT films (100 µm) on the Al₂O₃ substrate show εr and Q values of 146 and 1161 at about 10 GHz when sintered at 1250 °C for 1 h. At 1 MHz, the relative permittivity for the composite of BNT film + Al₂O₃ substrate is 39. As for TiTe₃O₈ thick films on Al₂O₃ substrates with thickness of at least 15 µm after sintering it was observed a dielectric permittivity of 30, and a Qxf of 20,000 GHz and a τf (tau f) smaller than 120 ppm/°C.

Based on the thickness and dielectric constant of the Al₂O₃ substrates, as described above it is possible to calculate the necessary width (W) of the microstrip line for making transmission lines of any specific impedance such as 75 or 100 ohm.

Preferably, the design is fixed with transmission line having an impedance similar to the one to be used in the circuit and a copper line is then firmly fixed very close (5-10 mm) to the dielectric resonators to ensure proper coupling.

Finally, the dielectric resonator (DR) coupled with a microstrip line filter can be inserted in a casing suitable for the intended use, such as an aluminium casing having an adhesive material, for example silver paste and epoxy applied to the bottom side of the alumina substrate to ensure a proper grounding and assuring that the adequate connection between the connectors and the microstrip line. Suitable connectors can be for example SMA (SubMiniature version A) connectors.

Characterization of the microstrip line coupled dual resonator filter of the invention was accessed by measurement of the transmission coefficient (S21) and return loss (S11) by using a vector network analyser.

According to the EPD method described above, it is possible to obtain a dual resonator filter targeted to miniaturised microwave and millimetre wave devices having thick dielectric resonator films of low loss, high Q, and low sintering temperature TiTe₃O₈ ceramics dielectrics printed /deposited on low loss insulator polycrystalline substrates coupled with a metallictape firmly fixed close to the dielectric thick films resonators by a low cost versatile and sustainable solution based method.

The resonator filters of the invention a present filter characteristics having pass band of 50 MHz centring around 9 GHz.

### Examples

### Example 1. Preparation of dielectric powders

Dielectric powders of TiTe₃O₈ powders were synthesized from reagent-grade TeO₂ (Sigma-Aldrich, > 99%, Japan) and TiO2 (Merck, > 99%, Germany) via a conventional solid-state-reaction method, as mentioned by Vilarinho et al.

The starting precursors were weighed according to the molar ratio of 3:1, balled mixed with ethanol and dried at 70 °C for 5 h. The mixed powders were calcined at 620 °C for 50 h and milled for 5 h in a planetary ball mill at 200 rpm using Teflon pots and zirconia balls.

### Example 2. Preparation of dielectric dispersions

Milled TiTe₃O₈ powders with particle size below 10 µm prepared as described in example 1, were ultrasonically dispersed in acetone (> 99.5%, Panreac) with a concentration of 10 g/l.

Triethanolamine (TEA) (> 99%, Merck) was optionally added as a suspension stabilizer to favour the EPD process. The addition of TEA increased considerably the zeta potential of the suspension to 46.5 mV at pH of 8.1, what guaranteed the fabrication of good and homogeneous films.

The suspensions were magnetically stirred for 5 h at room temperature. The stability of the suspensions was analysed by transmittance of the UV light, particle size distribution and zeta potential of suspensions.

### Example 3. Preparation of non-conducting alumina (Al₂O₃)

Non-conducting alumina (Al₂O₃) substrates were temporarily made conductors by coating them with a sacrificial conducting carbon coating that acts as a temporary electrode being burned at high sintering temperatures without leaving any residual contaminations.

A radio frequency (RF) magnetron sputtering (CRIOLAB, Portugal) was used to deposit the carbon layer on polycrystalline Al₂O₃ substrates (25.4 × 25.4 × 0.0254 mm, 99.6%, Coors Ceramics Co. UK, with the remaining 0.4 wt.% assumed to be a silicate based sintering aid) and carbon targets (purity > 99.9%, Sofacel Inc., Spain) of 5.5 cm diameter disc with 3 mm thick were used.

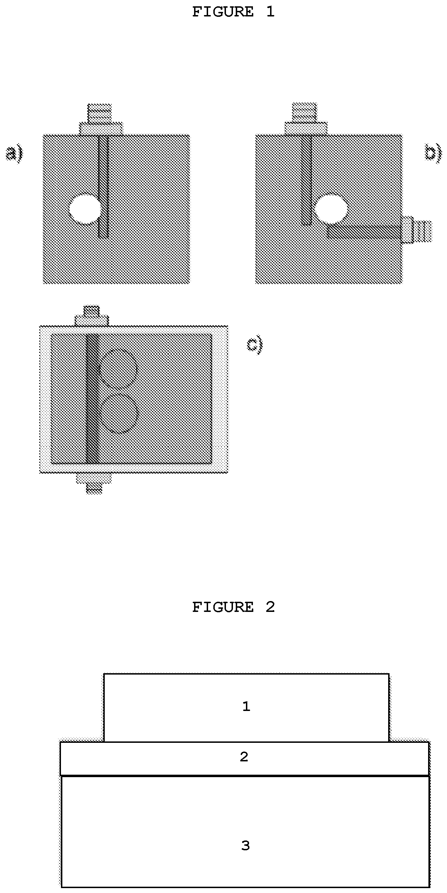

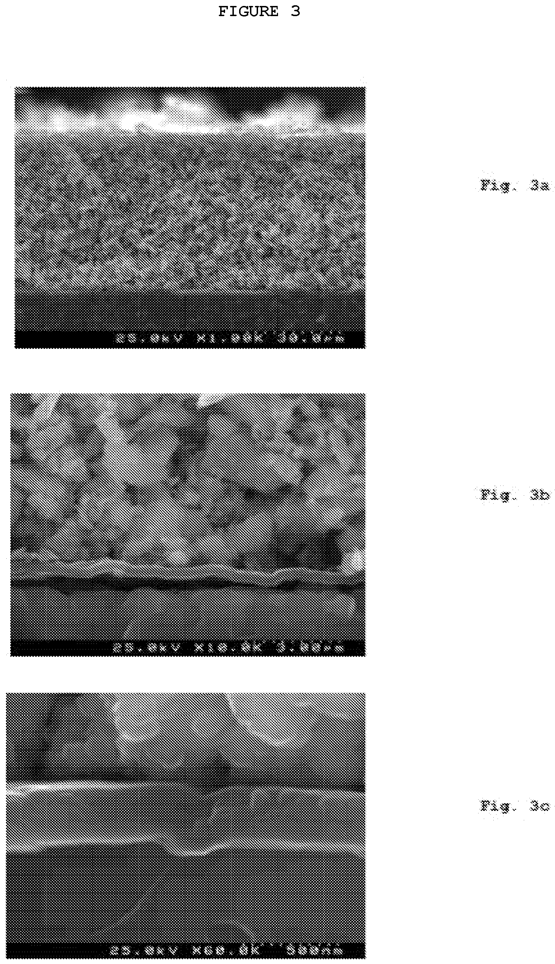

The carbon coatings were prepared at a substrate - magnetron distance of 120 mm under Ar pressure of 5.8 × 10-3 mbar, with a magnetron current of 0.3 A and a substrate bias of 470 V. The thickness of the carbon layer was controlled by the deposition time and varied between 100 and 400 nm (Figure 2 and 3).

### Example 4. EPD of TiTe₃O₈ onto non-conducting alumina (Al₂O₃)

TiTe₃O₈ coatings prepared according to example 2 were printed / deposited onto non conducting alumina (Al₂O₃) substrates of 25.4 × 25.4 × 0.0254 mm, 99.6%, Coors Ceramics Co. UK (with there 0.4 wt. % assumed to be a silicate based sintering aid) by electrophoretic deposition (EPD).

Stainless steel was chosen as the counterpart electrode and a dc voltage supplier (Glassman High Voltage Inc.) generated the dc voltage in the range of 100 to 400 V for various periods of time (1 up to 5 min).

A Teflon mask with the disks size was used to deposit the two circular parallel dielectric green disk thick films (Figure 5).

### Example 5. Sintering of TiTe₃O₈ films

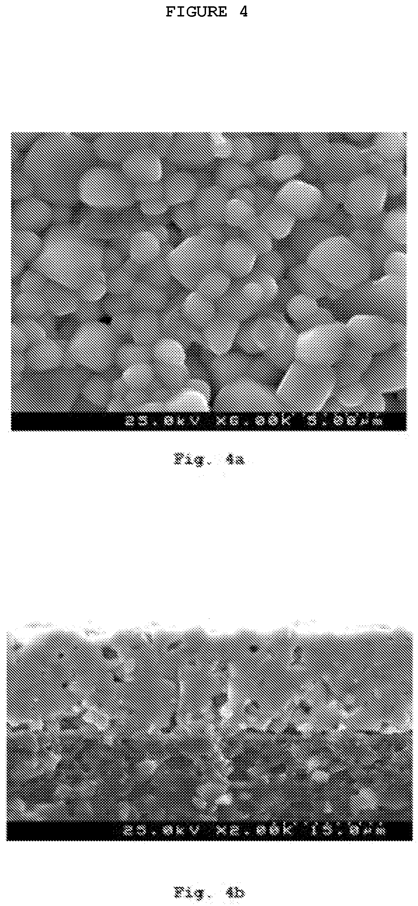

The coatings prepared as described in example 4 were dried for more than 24 h at room temperature. The films were sintered from 680 °C to 720 °C for different periods of time (ranging from 3 - 6 h) in a closed alumina crucible together with TeOz powders, to avoid Te volatilization. The use of TeOz powder meant to increase the partial pressure of TeOz and to suppress the evaporation from TiTe₃O₈ (Figure 4 and 5).

### Example 6. Preparation of a microstrip line coupled dual resonator filter

To fabricate a microstrip line coupled dual resonator filter the previous alumina substrates with the dual dielectric TiTe₃O₈ thick films prepared as described in example 5 were used.

Based on the thickness and dielectric constant of the alumina substrates the width W of the microstrip line for making a 50 ohm transmission line was calculated and the calculated width was 1.85 mm. 1.85 mm width copper tape of 0.1 mm tick was firmly fixed very close to the dielectric resonators to ensure proper coupling.

A schematic representation of the dielectric resonator (DR) coupled microstrip line filter, which has been developed using the EPD printed thick resonator films is shown in Figure 6.

### Example 7. Characterization of a microstrip line coupled dual resonator filter

For proper measurement a rectangular cavity of 35 × 25 × 10mm is fabricated using aluminium metal. SMA connectors (SMA (SubMiniature version A) connectors that are semi-precision coaxial RF connectors) were fixed adjacent sides to facilitate connection to the microstrip line.

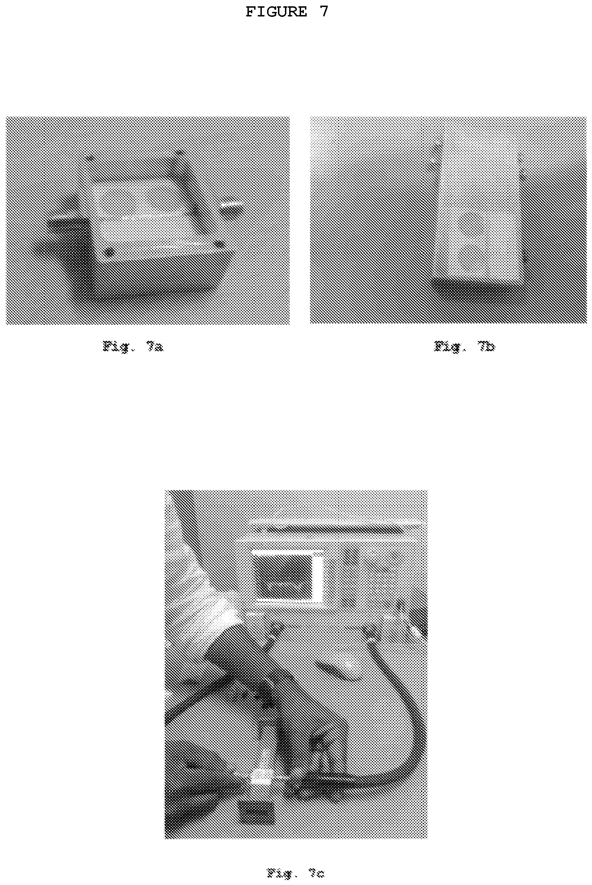

Silver paste and epoxy was applied to the bottom side of the alumina substrate to ensure proper grounding with the aluminium casing Figure 7.

The transmission coefficient (S21) and return loss (S11) were measured using a vector network analyser.

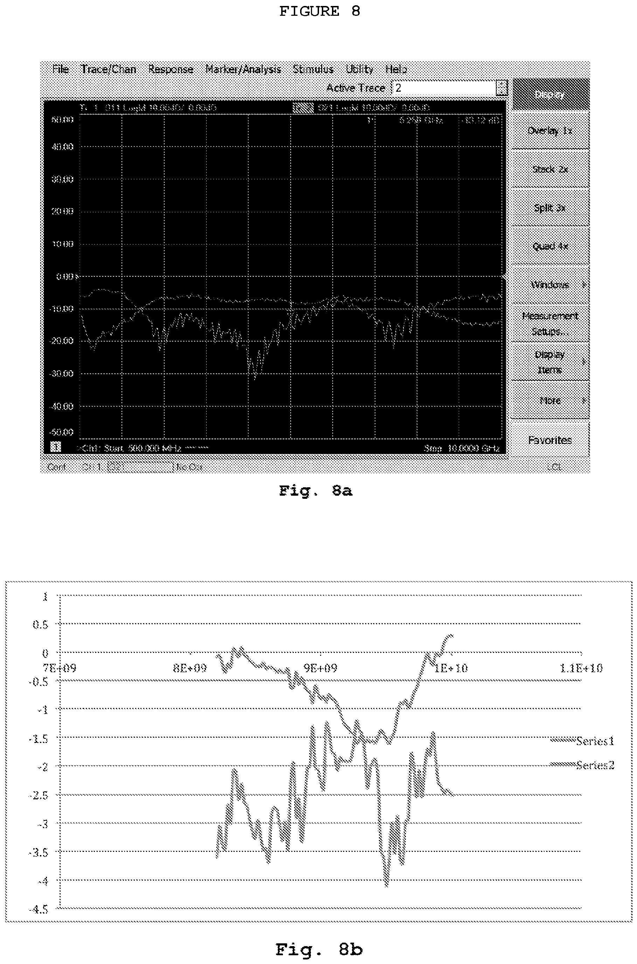

The characteristics of the thick film dielectric resonator circuit is shown in Figure 8. The circuit shows a filter characteristics having pass band of 50MHz centring around 9 GHz. These results point out the possibilities of making planar microwave circuits using EPD in a much simpler way.

## Claims

1. A dual resonator filter comprising a dielectric film printed on a non-conductive or insulating substrate and a metallic microstrip line coupled to said substrate,
the dielectric film is a low sintering temperature TiTe₃O₈ film; wherein
- the non-conductive or insulating substrate is selected from alumina, AIN, or SiC, preferably alumina; and wherein
- the metallic microstrip line coupled to said substrate is made of copper, gold or platinum, preferably copper;
wherein the TiTe₃O₈ film is a dual circular layer.

2. The dual resonator filter according to the previous claim wherein the TiTe₃O₈ film has a thickness of 30 µm to 100 µm, preferably 40 µm to 70 µm, even more preferably 45 µm to 60 µm.

3. The dual resonator filter according to any of the previous claims 1-2 wherein the insulating substrate is an alumina substrate, preferably a carbon coated alumina insulating substrate, preferably a graphite coated alumina insulating substrate.

4. The dual resonator filter according to any of the previous claims 1-3 wherein the copper microstrip line is coupled to said insulating substrate at a distance of 5 to 10 mm to the dielectric layers of the TiTe₃O₈ film.

5. The dual resonator filter according to any of the previous claims, wherein the non-conductive or insulating alumina is carbon Al₂O₃ substrate, preferably a graphite Al₂O₃ substrate.

6. A process for obtaining the dual resonator filter according to claims 1-5, comprising the following steps:
a) obtaining a low sintering TiTe₃O₈ film printed on a non-conductive or insulating alumina, AIN, or SiC, substrate, being preferably an alumina substrate, more preferably a carbon Al₂O₃ substrate, even more preferably a graphite Al₂O₃ substrate obtained by electrophoretic deposition; and
b) coupling the metallic microstrip line to said substrate, wherein the metallic microstrip line is made of copper, gold or platinum, preferably made of copper.

7. The process according to the previous claim further comprising the following sub-steps:
i. providing a TiTe₃O₈ dielectric powder;
ii. providing a TiTe₃O₈ dielectric suspension;
iii. providing a non-conductive or insulating alumina, AIN, or SiC substrate, preferably a carbon Al₂O₃ substrate, more preferably a graphite Al₂O₃ substrate;
iv. performing electrophoretic deposition of TiTe₃O₈ dielectric suspensions onto the carbon coated substrate of the previous step;
v. sintering dual ceramic discs at a temperature commensurate with the crystallization temperature of the deposited layers;
vi. coupling a metallic line made of copper onto the substrate at a distance of about 5 to 10 mm to the dual circular TiTe₃O₈ dielectric discs.

8. The process according to claim 7 wherein the carbon coated substrate obtained by electrophoretic deposition comprises a sacrificial conducting carbon coating for acting as temporary electrode and it is provided a metallic electrode, preferably a stainless steel electrode, for acting as counterpart electrode to said coated substrate.

9. The process according to claim 7 wherein the electrophoretic deposition of TiTe₃O₈ further comprises the use of a mask to define the dimensions of the TiTe₃O₈ film printed on the substrate.

10. The process according to claim 7 wherein the sintering temperature ranges between 600 °C to 800 °C, preferably between 650 °C to 750 °C, more preferable between 680 °Cto 720 °C, for a period of time ranging between 3 to 6 hours, preferably between 3.5 to 5.5 hours, more preferably between 4 to 5 hours.

11. The process according to claim 7 wherein the width, W of the copper microstrip line is calculated for making a transmission line with a specific impedance of 50, 75 or 100 ohm.

12. A process according to any of the previous claims 6 to 11 further comprising the step of housing the dual resonator filter according to claims 1-5 in a metallic housing with an adhesive material and connectors.

## Patentansprüche

1. Ein Filter mit zwei Resonatoren, umfassend eine dielektrische Schicht, die auf ein nichtleitendes oder isolierendes Substrat gedruckt ist, und eine metallische Mikrostreifenleitung, die mit dem genannten Substrat verbunden ist, wobei die dielektrische Schicht eine TiTeaOs-Schicht mit niedriger Sintertemperatur ist; wobei
- das nichtleitende oder isolierende Substrat aus Aluminiumoxid, AIN oder SiC, bevorzugt Aluminiumoxid, ausgewählt ist; und wobei
- die mit dem genannten Substrat verbundene metallische Mikrostreifenleitung aus Kupfer, Gold oder Platin, bevorzugt aus Kupfer ist;
wobei die TiTeaOs-Schicht eine kreisförmige Doppelschicht ist.

2. Der Filter mit zwei Resonatoren nach dem vorangehenden Anspruch, wobei die TiTeaOs-Schicht eine Stärke von 30 µm bis 100 µm, bevorzugt 40 µm bis 70 µm, ganz besonders bevorzugt 45 µm bis 60 µm aufweist.

3. Der Filter mit zwei Resonatoren nach einem der vorangehenden Ansprüche 1-2, wobei das isolierende Substrat ein Aluminiumoxid-Substrat ist, bevorzugt ein mit Kohlenstoff beschichtetes isolierendes Aluminiumoxid-Substrat, bevorzugt ein mit Graphit beschichtetes isolierendes Aluminiumoxid-Substrat.

4. Der Filter mit zwei Resonatoren nach einem der vorangehenden Ansprüche 1-3, wobei die Mikrostreifenleitung aus Kupfer mit dem genannten isolierenden Substrat in einem Abstand von 5 bis 10 mm zu den dielektrischen Schichten der TiTeaOs-Schicht verbunden ist.

5. Der Filter mit zwei Resonatoren nach einem der vorangehenden Ansprüche, wobei das nichtleitende oder isolierende Aluminiumoxid ein Kohlenstoffsubstrat Al₂O₃, bevorzugt ein Graphitsubstrat Al₂O₃ ist.

6. Ein Verfahren zur Herstellung des Filters mit zwei Resonatoren nach einem der Ansprüche 1-5, umfassend die folgenden Schritte:
a) Gewinnen einer TiTeaOs-Schicht mit niedrigem Sintergrad, die auf ein nichtleitendes oder isolierendes Substrat aus Aluminiumoxid, AIN oder SiC gedruckt wird, bevorzugt ein Aluminiumoxid-Substrat, besonders bevorzugt ein Kohlenstoffsubstrat Al₂O₃, ganz besonders bevorzugt ein Graphitsubstrat Al₂O₃, das durch elektrophoretische Abscheidung erhalten wird; und
b) Koppeln der metallischen Mikrostreifenleitung mit dem genannten Substrat, wobei die metallische Mikrostreifenleitung aus Kupfer, Gold oder Platin, bevorzugt aus Kupfer, ist.

7. Das Verfahren nach dem vorangehenden Anspruch ferner die folgenden Teilschritte umfassend:
i) Bereitstellen eines dielektrischen TiTesOs-Pulvers;
ii) Bereitstellen einer dielektrischen TiTesOs-Suspension;
iii) Bereitstellen eines nichtleitenden oder isolierenden Substrats aus Aluminiumoxid, AIN oder SiC, bevorzugt eines Kohlenstoffsubstrats Al₂O₃, besonders bevorzugt eines Graphitsubstrats Al₂O₃;
iv) Elektrophoretisches Abscheiden der dielektrischen TiTesOs-Suspensionen auf das kohlenstoffbeschichtete Substrat aus dem vorherigen Schritt;
v) Sintern von Doppelkeramikscheiben bei einer Temperatur, die der Kristallisationstemperatur der aufgebrachten Schichten entspricht;
vi) Verbinden einer metallischen Leitung aus Kupfer mit dem Substrat in einem Abstand von etwa 5 bis 10 mm zu den beiden kreisförmigen dielektrischen TiTesOs-Scheiben.

8. Das Verfahren nach Anspruch 7, wobei das durch elektrophoretische Abscheidung erhaltene kohlenstoffbeschichtete Substrat eine leitende Opferschicht aus Kohlenstoff umfasst, die als temporäre Elektrode dient, und eine Metallelektrode, bevorzugt eine Elektrode aus rostfreiem Stahl, bereitgestellt wird, die als Gegenelektrode zu dem genannten beschichteten Substrat dient.

9. Das Verfahren nach Anspruch 7, wobei das elektrophoretische Abscheiden von TiTeaOs ferner die Verwendung einer Maske umfasst, um die Abmessungen der auf das Substrat gedruckten Schicht aus TiTeaOs zu definieren.

10. Das Verfahren nach Anspruch 7, wobei die Sintertemperatur zwischen 600 °C und 800 °C, bevorzugt zwischen 650 °C und 750 °C, besonders bevorzugt zwischen 680 °C und 720 °C, für einen Zeitraum zwischen 3 und 6 Stunden, bevorzugt zwischen 3,5 und 5,5 Stunden, besonders bevorzugt zwischen 4 und 5 Stunden liegt.

11. Das Verfahren nach Anspruch 7, bei dem die Breite W der Kupfermikrostreifenleitung für die Herstellung einer Übertragungsleitung mit einer spezifischen Impedanz von 50, 75 oder 100 Ohm berechnet wird.

12. Ein Verfahren nach einem der vorangehenden Ansprüche 6 bis 11, ferner umfassend den Schritt des Einbauens des Filters mit zwei Resonatoren nach einem der Ansprüche 1-5 in ein Metallgehäuse mit einem Haftmaterial und Verbindern.

## Revendications

1. Un filtre à deux résonateurs comprenant un film diélectrique imprimé sur un substrat non conducteur ou isolant et une ligne à microbandes métallique accouplée audit substrat, le film diélectrique étant un film TiTe₃O₈ de frittage à basse température ; dans lequel
- le substrat non conducteur ou isolant est choisi parmi l'alumine, l'AIN ou le SiC, préférablement l'alumine, et dans lequel
- la ligne à microbandes métallique accouplée audit substrat est faite en cuivre, en or ou en platine, préférablement en cuivre ;
dans lequel le film TiTe₃O₈ est une couche circulaire double.

2. Le filtre à deux résonateurs selon la revendication précédente dans lequel le film TiTe₃O₈ a une épaisseur de 30 µm à 100 µm, préférablement 40 µm à 70 µm, encore plus préférablement 45 µm à 60 µm.

3. Le filtre à deux résonateurs selon l'une quelconque des revendications précédentes 1-2 dans lequel le substrat isolant est un substrat d'alumine, préférablement un substrat isolant d'alumine revêtue de carbone, préférablement un substrat isolant d'alumine revêtue de graphite.

4. Le filtre à deux résonateurs selon l'une quelconque des revendications précédentes 1-3 dans lequel la ligne à microbandes de cuivre est accouplée audit substrat isolant à une distance de 5 à 10 mm des couches diélectriques du film TiTe₃O₈.

5. Le filtre à deux résonateurs selon l'une quelconque des revendications précédentes, dans lequel l'alumine non conductrice ou isolante est un substrat Al₂O₃ de carbone, préférablement un substrat Al₂O₃ de graphite.

6. Un procédé pour obtenir le filtre à deux résonateurs selon les revendications 1-5, comprenant les étapes suivantes :
a) obtenir un film TiTe₃O₈ de frittage basse imprimé sur un substrat d'alumine, AIN ou SiC non conducteur ou isolant, s'agissant préférablement d'un substrat d'alumine, plus préférablement d'un substrat Al₂O₃ de carbone, encore plus préférablement d'un substrat Al₂O₃ de graphite obtenu par dépôt électrophorétique ; et
b) accoupler la ligne à microbandes métallique audit substrat, dans laquelle la ligne à microbandes métallique est faite en cuivre, en or ou en platine, préférablement faite en cuivre.

7. Le procédé selon la revendication précédente comprenant également les sous-étapes suivantes :
i. fournir une poudre diélectrique TiTe₃O₈ ;
ii. fournir une suspension diélectrique TiTe₃O₈ ;
iii. fournir un substrat d'alumine, AIN ou SiC non conducteur ou isolant, préférablement un substrat Al₂O₃ de carbone, plus préférablement un substrat Al₂O₃ de graphite ;
iv. réaliser un dépôt électrophorétique de suspensions diélectriques TiTe₃O₈ sur le substrat revêtu de carbone de l'étape précédente ;
v. fritter des disques céramiques doubles à une température compatible avec la température de cristallisation des couches déposées ;
vi. accoupler une ligne métallique faite en cuivre sur le substrat à une distance de près de 5 à 10 mm des disques diélectriques TiTe₃O₈ circulaires doubles.

8. Le procédé selon la revendication 7 dans lequel le substrat revêtu de carbone obtenu par dépôt électrophorétique comprend un revêtement de carbone conducteur sacrificiel pour agir en tant qu'électrode temporaire et contient une électrode métallique, préférablement une électrode en acier inoxydable, pour agir en tant que contrepartie dudit substrat revêtu.

9. Le procédé selon la revendication 7 dans lequel le dépôt électrophorétique de TiTe₃O₈ comprend également l'utilisation d'un masque pour définir les dimensions du film TiTe₃O₈ imprimé sur le substrat.

10. Le procédé selon la revendication 7 dans lequel la température de frittage se situe entre 600 °C et 800 °C, préférablement entre 650 °C et 750 °C, plus préférablement entre 680 °C et 720 °C, pour une période de temps située entre 3 et 6 heures, préférablement entre 3,5 et 5,5 heures, plus préférablement entre 4 et 5 heures.

11. Le procédé selon la revendication 7 dans lequel la largeur, W, de la ligne à microbandes de cuivre est calculée pour faire une ligne de transmission avec une impédance spécifique de 50, 75 ou 100 ohm.

12. Un procédé selon l'une quelconque des revendications précédentes 6 à 11 comprenant également l'étape consistant à héberger le filtre à deux résonateurs selon les revendications 1-5 dans un boîtier métallique avec un matériau adhésif et des connecteurs.
